(19) Europäisches Patentamt / European Patent Office / Office européen des brevets

(11) EP 2 225 300 B1

(12) # EUROPÄISCHE PATENTSCHRIFT

(45) Veröffentlichungstag und Bekanntmachung des Hinweises auf die Patenterteilung: **06.07.2016 Patentblatt 2016/27**

(21) Anmeldenummer: **08862788.0**

(22) Anmeldetag: **18.12.2008**

(51) Int Cl.:
***C08G 18/20*** *(2006.01)* ***C08G 18/28*** *(2006.01)*
***C08G 18/62*** *(2006.01)* ***C08G 18/77*** *(2006.01)*
***C08G 18/79*** *(2006.01)* ***C09D 175/04*** *(2006.01)*
***C08K 3/32*** *(2006.01)*

(86) Internationale Anmeldenummer: **PCT/EP2008/010810**

(87) Internationale Veröffentlichungsnummer: **WO 2009/077182 (25.06.2009 Gazette 2009/26)**

(54) **BESCHICHTUNGSMITTEL MIT HOHER KRATZBESTÄNDIGKEIT UND WITTERUNGSSTABILITÄT**

COATING COMPOSITION HAVING A HIGH SCRATCH RESISTANCE AND WEATHERING STABILITY

PRODUIT DE REVÊTEMENT AYANT UNE RÉSISTANCE ÉLEVÉE AUX RAYURES ET UNE GRANDE STABILITÉ AUX INTEMPÉRIES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.12.2007 DE 102007061855**

(43) Veröffentlichungstag der Anmeldung: **08.09.2010 Patentblatt 2010/36**

(73) Patentinhaber: **BASF Coatings GmbH**
**48165 Münster (DE)**

(72) Erfinder:
- **POPPE, Andreas**
  **48324 Sendenhorst (DE)**
- **HOLTSCHULTE, Sabine**
  **59387 Ascheberg (DE)**
- **FELDMANN, Björn**
  **48165 Münster (DE)**
- **HILGE, Oliver**
  **48317 Drensteinfurt (DE)**
- **KLEIN, Günter**
  **48165 Münster (DE)**

(74) Vertreter: **Leifert & Steffan et al**
**Patentanwälte**
**Burgplatz 21-22**
**40213 Düsseldorf (DE)**

(56) Entgegenhaltungen:
**WO-A-00/55229**
**WO-A-2004/104078**
**WO-A-2008/074489**
**DE-A1-102005 045 228**
**US-A- 5 747 590**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Beschichtungsmittel enthaltend

(a) mindestens eine hydroxylgruppenhaftige Verbindung (A),
(b) mindestens eine Verbindung (B) mit freien und/oder blockierten Isocyanatgruppen, und
(c) mindestens einen phosphorhaltigen Katalysator (C) für die Vernetzung von Silangruppen,
(d) mindestens einen weiteren Katalysator (D)

wobei ein oder mehrere Bestandteile des Beschichtungsmittels hydrolysierbare Silangruppen enthalten und der Katalysator (D) ein bicyclisches Amin ist und der Katalysator (D) 1,5-Diazabicyclo[4.3.0]non-5-en oder 1,8-Diazabicyclo[5.4.0]undec-7-en ist.
In der WO-A-01/98393 werden 2K-Beschichtungsmittel beschrieben, welche ein Polyol als Bindemittelkomponente sowie als Vernetzerkomponente ein Polyisocyanat, welches teilweise mit Alkoxysilylgruppen funktionalisiert ist, enthalten. Diese Beschichtungsmittel werden als Primer eingesetzt und auf die Haftung mit metallischen Untergründen, insbesondere Aluminium-Untergründe, optimiert. Auf diese Beschichtungsmittel können Im Rahmen einer OEM-Serienlackierung oder einer Reparaturlackierung Basislack-Klarlack-Aufbauten aufgebracht werden.
Hinsichtlich der Kratzfestigkeit und der Witterungsstabilität sind die Beschichtungsmittel gemäß WO 01/98393 nicht optimiert. Es wird keine Aussage zum quantitativen Umsatz der Silangruppen und/oder der Isocyanatgruppen während der Vernetzungsreaktion gemacht.

In EP-A-0 994 117 werden feuchtehärtbare Mischungen beschrieben, welche eine Polyolkomponente und eine Polyisocyanat-Komponente, die teilweise mit einem bevorzugt zu einem Aspartat umgesetzten Monoalkoxysilylalkylamin umgesetzt sein kann, enthalten. Beschichtungen aus solchen Mischungen weisen zwar eine gewisse Härte auf, sind jedoch hinsichtlich Witterungsstabilität und insbesondere hinsichtlich ihrer Kratzfestigkeit für OEM-Anwendungen nur bedingt geeignet. US-A-2006/0217472 beschreibt Beschichtungsmittel, welche ein hydroxyfunktionelles Acrylat, eine niedermolekulare Polyol-Komponente, ein Polyisocyanat sowie eine aminofunktionelle Alkoxysilylkomponente, bevorzugt Bisalkoxysilylamin, enthalten können. Solche Beschichtungsmittel werden als Klarlack in Basislack-Klarlack-Aufbauten eingesetzt und führen zu kratzfesten Beschichtungen. Sie sind allerdings nur sehr bedingt lagerfähig und die resultierenden Beschichtungen weisen eine geringe Witterungsstabilität, insbesondere gegen UV-Strahlung im Feucht-Trocken-Zyklus, auf.

In WO 2006/042585 werden Klarlacke, die für die OEM-Serienlackierung geeignet sind, beschrieben, welche als Hauptbindemittelkomponente Polyisocyanate, deren Isocyanatgruppen vorzugsweise zu mehr als 90 mol-% mit Bisalkoxysilylaminen umgesetzt sind, enthalten. Solche Klarlacke weisen eine ausgezeichnete Kratzbeständigkeit bei gleichzeitig hoher Chemikalien- und Witterungsbeständigkeit auf. Allerdings besteht noch Bedarf nach weiterer Verbesserung der Witterungsstabilität, insbesondere gegen Rissbildung bei UV-Bestrahlung im Feucht-Trockenzyklus, bei Erhalt des hohen Niveaus der Kratzfestigkeit.

EP-A-1 273 640 beschreibt 2K-Beschichtungsmittel, bestehend aus einer Polyol-Komponente und einer Vernetzerkomponente, bestehend aus aliphatischen und/oder cycloaliphatischen Polyisocyanaten, wobei 0,1 bis 95 mol-% der ursprünglich freien vorhandenen Isocyanatgruppen mit Bisalkoxylsilylamin umgesetzt ist. Diese Beschichtungsmittel können für die OEM-Serienlackierung eingesetzt werden und weisen nach ihrer vollständigen Härtung eine gute Kratzbeständigkeit bei gleichzeitig guter Beständigkeit gegen Umwelteinflüsse auf. Jedoch neigen diese Beschichtungsmittel besonders stark zur Nachvernetzung, was eine - direkt nach der thermischen Endhärtung - nur unzureichende Kratzfestigkeit der Beschichtungen zur Folge hat. Ebenso wirkt sich die starke Nachvernetzung negativ auf die Witterungsstabilität aus, da eine erhöhte Gefahr von Spannungsrissen besteht.

Die oben beschriebenen Beschichtungsmittel, die durch den Einsatz von organofunktionellen Silanen sowohl anorganische als auch organische Bestandteile enthalten, werden auch als anorganisch-organische Beschichtungsmittel bezeichnet. Je nach der verwendeten Formulierung können Oberflächen mit extremer Kratzbeständigkeit hergestellt werden.

Es ist in der Literatur bekannt, dass Vernetzungsreaktionen mit Hilfe von sehr unterschiedlichen Katalysatoren beschleunigt werden können. Während sich als Katalysatoren für die Isocyanat-Vernetzung insbesondere tertiäre Amine oder bestimmte Metallkatalysatoren eignen (siehe u.a. M. Dahm, K. Uhlig, Kunststoffhandbuch 7, Seite 92 ff.), werden zur Katalyse der Silankondensationsreaktionen insbesondere Säuren, speziell auch blockierte Phosphorsäureteilester eingesetzt. In derartigen anorganischen-organischen Hybridsystemen kann es zu unerwünschten Wechselwirkungen zwischen den jeweils eingesetzten Katalysatoren kommen, weil einige Katalysatoren einerseits jeweils eine Reaktion beschleunigen und die andere simultan ablaufende Reaktion unter Umständen inhibieren. Des weiteren müssen Aspekte der Umweltverträglichkeit von Katalysatoren berücksichtigt werden. So ist u. a. der Einsatz von Zinn - haltigen Katalysatoren nur sehr eingeschränkt in der Praxis möglich, da diese Materialien sehr toxisch auf den menschlichen Organismus wirken. Experimentelle Untersuchungen haben gezeigt, dass der Einsatz eines einzelnen Katalysators in der Regel

nicht ausreicht, um beide Vernetzungsreaktionen entsprechend zu beschleunigen. Häufig führt dies in der Praxis dazu, dass vergleichsweise niedrige Umsätze zumindest bei einer der Vernetzungsreaktionen festgestellt werden, z. B. bei der Isocyanatreaktion nur ca. 20%.

## Aufgabe

Aufgabe der vorliegenden Erfindung war es, Beschichtungsmittel, insbesondere für die Klarlackschicht bei OEM-Serienlackierungen und bei Automobilreparaturlackierungen, zur Verfügung zu stellen, die zu einem hochgradig witterungsstabilen Netzwerk führen, wobei die unerwünschte Ausbildung von hydrolyse- und witterungslabilen Gruppierungen weitestgehend unterdrückt wird, um eine hohe Säurebeständigkeit zu gewährleisten. Daneben sollen die Beschichtungsmittel zu Beschichtungen führen, welche schon direkt nach der thermischen Härtung hochgradig kratzfest sind und insbesondere einen hohen Glanzerhalt nach Kratzbelastung aufweisen. Weiterhin sollten sich die Beschichtungen und Lackierungen, speziell die Klarlackierungen, auch in Schichtdicken > 40 $\mu$m herstellen lassen, ohne dass Spannungsrisse auftreten. Dies ist eine wesentliche Voraussetzung für die Verwendung der Beschichtungen und Lackierungen, insbesondere der Klarlackierungen, in dem technologisch und ästhetisch besonders anspruchsvollen Gebiet der Automobilserlenlackierung (OEM).

Insbesondere sollten Klarlackierungen mit hoher Beständigkeit, besonders gegen Rissbildung, bei Bewitterung mit UV-Strahlung im Feucht-Trockenzyklus in Kombination mit ausgezeichneter Kratzfestigkeit zur Verfügung gestellt werden.

Darüber hinaus sollen die neuen Beschichtungsmittel einfach und sehr gut reproduzierbar herstellbar sein und während der Lackapplikation keine ökologischen Probleme bereiten.

Eine wesentliche Aufgabe der vorliegenden Erfindung ist es, bel Lacken, die durch eine Hydrolyse von Alkoxysilanverbindungen und zusätzlich durch die Reaktion von Isocyanatgruppen mit Hydroxylgruppen ausgehärtet werden, eine möglichst vollständige Umsetzung beider Reaktionen zu erzielen. Insbesondere soll der Isocyanatumsatz gesteigert werden, ohne dass die Silanvometzung negativ beeinflusst wird. Überraschenderweise wurde gefunden, dass diese Aufgabe durch den Einsatz von bicyclischen Aminen zur Blockierung von Phosphorsäurakatalysatoren gelöst werden kann.

## Lösung der Aufgabe

Gegenstand der vorliegenden Erfindung sind daher Beschichtungsmittel der eingangs genannten Art, bei denen der Katalysator (D) ein bicyclischer Amin Ist und der Katalysator (D) 1,5-Diazabicyclo[4.3.0]non-5-en oder 1,8-Diazabicyclo[5.4.0]undec 7-en ist. Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Beschichtungsmittels gelöst werden konnten.

Die erfindungsgemäßen Komponenten können besonders einfach und sehr gut reproduzierbar hergestellt werden und bereiten bei der Lackapplikation keine signifikanten toxikologischen und ökologischen Probleme.

Vorteilhafte Ausgestaltungen der vorliegenden Erfindung ergeben sich aus den Unteransprüchen.

Die erfindungsgemäßen Beschichtungsmittel liefern neue Beschichtungen und Lackierungen, speziell Klarlackierungen, die hoch kratzfest sind und im Gegensatz zu gängigen hochvernetzten kratzfesten Systemen säureresistent sind. Weiterhin lassen sich die erfindungsgemäßen Beschichtungen und Lackierungen, speziell die Klarlackierungen, auch in Schichtdicken > 40 $\mu$m herstellen, ohne dass Spannungsrisse auftreten. Deswegen können die erfindungsgemäßen Beschichtungen und Lackierungen, insbesondere die Klarlackierungen, in dem technologisch und ästhetisch besonders anspruchsvollen Gebiet der Automobilserienlackierung (OEM) eingesetzt werden. Dabei zeichnen sie sich durch eine besonders hohe Waschstraßenbeständigkeit und Kratzfestigkeit aus. Insbesondere ist die hohe Kratzfestigkeit der Beschichtungen direkt nach der Endhärtung der Beschichtungen gegeben, so dass die Beschichtungen direkt im Anschluß an die Endhärtung problemlos gehandhabt werden können. Außerdem ist die Beständigkeit der erfindungsgemäßen Beschichtungen gegen Rissbildung bei UV-Strahlung und Feucht-Trockenwechsel im CAM180-Test (nach DIN EN ISO 11341 Feb 98 und DIN EN ISO 4892-2 Nov 00) in Kombination mit einer hohen Kratzfestigkeit ausgezeichnet.

Es wird angenommen, dass die vorstehend beschriebenen vorteilhaften Eigenschaften auf den vollständigen Ablauf der simultan stattfindenden Vernetzungsreaktionen zurückzuführen ist.

## Beschreibung der Erfindung

Als Katalysatoren (C) für die Silanvernetzung werden phosphor- und stickstoff-haltige Katalysatoren eingesetzt. Dabei können auch Mischungen aus zwei oder mehreren verschiedenen Katalysatoren (C) eingesetzt werden. Beispiele für geeignete phosphorhaltige Katalysatoren (C) sind substituierte Phosphonsäurediester und Diphosphonsäurediester, vorzugsweise aus der Gruppe, bestehend aus acyclischen Phosphonsäurediestern, cyclischen Phosphonsäurediestern,

acyclischen Diphosphonsäurediestern und cyclischen Diphosphonsäurediestern. Derartige Katalysatoren sind beispielsweise in der deutschen Patentanmeldung DE-A-102005045228 beschrieben.

Insbesondere werden aber als Katalysator (C) substituierte Phosphorsäuremonoester und Phosphorsäurediester, vorzugsweise aus der Gruppe, bestehend aus acyclischen Phosphorsäurediestern und cyclischen Phosphorsäurediestern, besonders bevorzugt Aminaddukte der Phosphorsäure-mono- und -di-ester, eingesetzt.

Dabei werden die acyclischen Phosphorsäurediester (C) insbesondere aus der Gruppe, bestehend aus acyclischen Phosphorsäurediestern (C) der allgemeinen Formel (IV):

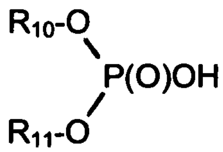

(IV);

ausgewählt, wobei die Reste $R_{10}$ und $R_{11}$ aus der Gruppe, bestehend aus:

- substituiertem und unsubstituiertem Alkyl- mit 1 bis 20, vorzugsweise 2 bis 16 und insbesondere 2 bis 10 Kohlenstoffatomen, Cycloalkyl- mit 3 bis 20, vorzugsweise 3 bis 16 und insbesondere 3 bis 10 Kohlenstoffatomen und Aryl- mit 5 bis 20, vorzugsweise 6 bis 14 und insbesondere 6 bis 10 Kohlenstoffatomen,
- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und
- substituiertem und unsubstituiertem Rest- der vorstehend aufgeführten Art, enthaltend mindestens ein, insbesondere ein, Heteroatom, ausgewählt aus der Gruppe bestehend aus Sauerstoffatom, Schwefelatom, Stickstoffatom, Phosphoratom und Siliziumatom, insbesondere Sauerstoffatom, Schwefelatom und Stickstoffatom

ausgewählt werden und zusätzlich auch Wasserstoff darstellen können (Teilversterung).

Die Katalaysatoren (C) werden vorzugsweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt Die Katalysatoren (D) sind 1,5-Diazabicyclo[4.3.0]non-5-en oder 1,8-Diazabicyclo[5.4.0]undec-7-en. Die Katalysatoren werden vorzugsweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt. Dabei hat auch die eingesetzte Menge des Katalysators einen gewissen Einfluß auf die Vernetzung, da eine geringere Wirksamkeit des Katalysators durch entsprechend höhere Einsatzmengen teilweise kompensiert werden kann.

**Die Struktureinheiten mit hydrolysierbaren Silangruppen**

Es ist erfindungswesentlich, dass ein oder mehrere Bestandteile des Beschichtungsmittels hydrolysierbare Silangruppen enthalten. Insbesondere kommen hier Beschichtungsmittel in Betracht, bei denen ein oder mehrere Bestandteile des Beschichtungsmittels zumindestens teilweise eine oder mehrere, gleiche oder verschiedene Struktureinheiten der Formel (I) aufweisen

$$-X-Si-R''_xG_{3-x} \qquad (I)$$

mit

G = identische oder unterschiedliche hydrolysierbare Gruppen,

X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,

R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest,

insbesondere mit 1 bis 6 C-Atomen,

x = 0 bis 2, bevorzugt 0 bis 1, besonders bevorzugt x = 0.

Dabei hat auch die Struktur dieser Silanreste einen Einfluß auf die Reaktivität und damit auch auf die möglichst weitgehende Umsetzung während des Härtens der Beschichtung, also auf die Einstellung eines möglichst niedrigen Nachvernetzungsindexes (PCI).

Hinsichtlich der Verträglichkeit und der Reaktivität der Silane werden Silane mit 3 hydrolysierbaren Gruppen bevorzugt eingesetzt, d.h. x = 0.

Die hydrolysierbaren Gruppen G können ausgewählt werden aus der Gruppe der Halogene, insbesondere Chlor und Brom, aus der Gruppe der Alkoxygruppen, aus der Gruppe der Alkylcarbonylgruppen und aus der Gruppe der Acyloxygruppen. Besonders bevorzugt sind Alkoxygruppen (OR').

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X zwischen Silan - Funktionalität und organischer funktioneller Gruppe, die zur Reaktion mit dem modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist. Zur Verdeutlichung wird angeführt, dass Methacryloxymethyltrimethoxysilan ("alpha" - Silan, z.B. Handelsprodukt GENIOSIL® XL 33 der Firma Wacker) bevorzugt gegenüber Methacryloxypropyltrimethoxysilan ("gamma" - Silan, z.B. Handelsprodukt GENIOSIL® GF 31 der Firma Wacker) eingesetzt wird, um die hydrolysierbaren Silangruppen in das Beschichtungsmittel einzuführen.

Ganz allgemein sind Spacer, die die Reaktivität der Silane erhöhen, bevorzugt gegenüber Spacern, die die Reaktivität der Silane herabsetzen.

Daneben hat auch die Funktionalität der Silane einen Einfluß auf den Nachvernetzungsindex. Unter Funktionalität wird dabei die Anzahl der Reste der Formel (I) pro Molekül verstanden. Unter einem monofunktionellen Silan werden daher Silane verstanden, die pro Silan-Molekül jeweils einen Rest der Formel (I) in den zu modifizierenden Bestandteil einführen. Unter einem difunktionellen Silan werden dabei Silane verstanden, die pro Silan-Molekül jeweils zwei Reste der Formel (I) in den Bestandteil einführen.

Besonders bevorzugt sind erfindungsgemäß Beschichtungsmittel, bei denen die Bestandteile mit einer Mischung aus einem mono- und einem di-funktionellen Silan modifiziert worden sind. Als difunktionelle Silane werden dabei insbesondere die weiter unten beschriebenen aminofunktionellen Disilane der Formel (IIa) und als monofunktionelle Silane die weiter unten beschriebenen Silane der Formel (IIIa) eingesetzt.

Schließlich können auch nicht funktionelle Substituenten am organofunktionellen Silan, das zur Einführung der Struktureinheiten (I) bzw. (II) bzw. (III) eingesetzt wird, die Reaktivität der hydrolysierbaren Silangruppe beeinflussen. Beispielhaft sei dies erläutert am Beispiel von voluminösen, sperrigen Substituenten an der Aminfunktion, die die Reaktivität von Aminfunktionellen Silanen reduzieren können. Vor diesem Hintergrund ist N-(n-butyl)-3-aminopropyltrimethoxysilan bevorzugt vor N-Cyclohexyl-3-aminopropyltrimethoxysilan zur Einführung der Struktureinheiten (III).

Ganz allgemein sind die Reste, die die Reaktivität der Silane erhöhen, bevorzugt gegenüber Resten, die die Reaktivität der Silane herabsetzen.

Die Struktureinheiten der Formel (I) können auf unterschiedliche Arten in die Bestandteile des Beschichtungsmittels eingeführt werden. Gemeinsam ist den verschiedenen Arten jedoch, dass die Einführung der Struktureinheiten über eine Reaktion der funktionellen Gruppen der zu modifizierenden Bestandteile mit komplementären funktionellen Gruppen des Silans erfolgt. Beispielhaft seien daher im Folgenden verschiedenen Möglichkeiten zur Einführung der Struktureinheiten (I) in die Hydroxyl- und ggf. noch weitere reaktive Gruppen aufweisende Verbindung (A) und/oder in die Isocyanatgruppen aufweisende Verbindung (B) aufgeführt.

Zum Einsatz, insbesondere im Rahmen von Michael - Additionen, kommen beispielsweise primäre Aminosilane, wie 3 - Aminopropyltriethoxysilan (erhältlich z.B. unter dem Markennamen Geniosil® GF 93 von der Fa. Wacker Chemie), 3 - Aminopropyltrimethoxysilan (erhältlich z.B. unter dem Markennamen Geniosil® GF 96 von der Fa. Wacker Chemie), N-(2-Aminoethyl)-3-aminopropyltrimethoxysilan (erhältlich z.B. unter dem Markennamen Geniosil® GF 9 sowie Geniosil® GF 91 von der Fa. Wacker Chemie), N-(2-Aminoethyl)-3-aminopropylmethyldimethoxysilan (erhältlich z.B. unter dem Markennamen Geniosil® GF 95 von der Fa. Wacker Chemie) u.ä.

Zum Einsatz, insbesondere im Rahmen von Additionen an Isocyanat - funktionelle Verbindungen, kommen beispielsweise sekundäre Aminosilane, wie beispielsweise Bis-(2-trimethoxysilylethyl)amin, Bis-(2-triethoxysilylethyl)amin, Bis (3-triethoxysilylpropyl)amin (erhältlich unter dem Handelsnamen Dynasylan® 1122 bei der Firma Degussa), Bis (3-trimethoxysilylpropyl)amin (erhältlich unter dem Handelsnamen Dynasylan® 1124 bei der Firma Degussa), Bis-(4-triethoxysilylbutyl)amin, N-(n-butyl)-3-aminopropyltrimethoxysilan (erhältlich unter dem Handelsnamen Dynasylan® 1189 bei der Firma Degussa), N-(n-butyl)-3-aminopropyltriethoxysilan, N-Cyclohexyl-3-aminopropyltrimethoxysilan (erhältlich unter dem Markennamen Geniosil® GF 92 von der Fa. Wacker Chemie), N-Cyclohexyl-3-aminopropyltriethoxysilan, N-Cyclohexylaminomethylmethyldiethoxysilan (erhältlich von der Fa. Wacker Chemie unter dem Handelsnamen Geniosil® XL 924), N-Cyclohexylaminomethyltriethoxysilan (erhältlich von der Fa. Wacker Chemie unter dem Handelsnamen Geniosil® XL 926), N-Phenylaminomethyltrimethoxysilan (erhältlich von der Fa. Wacker Chemie unter dem Handelsnamen Geniosil® XL 973)

Epoxy - funktionelle Silane können insbesondere zur Addition an Carbonsäure- oder Anhydrid- funktionelle Verbindungen eingesetzt werden. Beispiele für geeignete Epoxy - funktionelle Silane sind 3-Glycidyloxypropyltrimethoxysilan (erhältlich bei der Fa. Degussa unter dem Handelsnamen Dynasylan® GLYMO), 3-Glycidyloxypropyltriethoxysilan (erhältlich bei der Fa. Degussa unter dem Handelsnamen Dynasylan® GLYEO)

Anhydrid - funktionelle Silane können insbesondere zur Addition an Epoxy - funktionelle Verbindungen eingesetzt werden. Beispielhaft für ein Silan mit Anhydrid - Funktionalität sei 3-(Triethoxysilyl)propylbernsteinsäureanhydrid (erhältlich von der Fa. Wacker Chemie unter dem Handelsnamen Geniosil® GF 20) genannt. Derartige Silane können im Rahmen von Michael Reaktionen oder auch im Rahmen von metallkatalysierten Reaktionen eingesetzt werden. Beispielhaft werden 3-Methacryloxypropyltrimethoxysilan (erhältlich z. B. bei der Fa. Degussa unter dem Handelsnamen Dynasilan® MEMO, oder bei der Fa. Wacker Chemie unter dem Handelsnamen Geniosil® GF 31), 3-Methacryloxypropyltriethoxysilan, Vinyltrimethoxysilan (erhältlich u. a. bei der Fa. Wacker Chemie unter dem Handelsnamen Geniosil® XL 10), Vinyldimethoxymethylsilan (erhältlich u. a. bei der Fa. Wacker Chemie unter dem Handelsnamen Geniosil® XL 12), Vinyltriethoxysilan (erhältlich u. a. bei der Fa. Wacker Chemie unter dem Handelsnamen Geniosil® GF 56), (Methacryloxymethyl)methyldimethoxysilan (erhältlich u. a. bei der Fa. Wacker Chemie unter dem Handelsnamen Geniosil® XL 32), Methacryloxymethyltrimethoxysilan (erhältlich u. a. bei der Fa. Wacker Chemie unter dem Handelsnamen Geniosil® XL 33), (Methacryloxymethyl)methyldiethoxysilan (erhältlich u. a. bei der Fa. Wacker Chemie unter dem Handelsnamen Geniosil® XL 34), Methacryloxymethyltriethoxysilan (erhältlich u. a. bei der Fa. Wacker Chemie unter dem Handelsnamen Geniosil® XL 36) genannt.

Silane mit Isocyanatofunktion oder Carbamatfunktion kommen insbesondere zum Einsatz im Rahmen von Reaktionen mit Hydroxy-funktionellen Verbindungen. Beispiele für Silane mit Isocyanatofunktion sind beispielsweise in der WO07/03857 beschrieben.

Geeignete Isocyanatoalkyltrialkoxysilane sind beispielsweise Isocyanatopropyltrimethoxysilan, Isocyanatopropylmethyldimethoxysilan, Isocyanatopropylmethyldiethoxysilan, Isocyanatopropyltriethoxysilan, Isocyanatopropyltriisopropoxysilan, Isocyanatopropylmethydiisopropoxysilan, Isocyanatoneohexyltrimethoxysilan, Isocyanatoneohexyldimethoxysilan, Isocyanatoneohexyldiethoxysilan, Isocyanatoneohexyltriethoxysilan, Isocyanatoneohexyltriisopropoxysilan, Isocyanatoneohexyldiisopropoxysilan, Isocyanatoisoamyltrimethoxysilan, Isocyanatoisoamylmethyldimethoxysilan, Isocyanatoisoamylmethyldiethoxysilan, Isocyanatoisoamyltriethoxysilan, Isocyanatoisoamyltriisopropoxysilan und Isocyanatoisoamylmethyldiisopropoxysilan. Viele Isocyanatoalkyltri- und --di-alkoxysilane sind im Handel beispielsweise unter der Bezeichnung SILQUEST® der Firma OSi Specialties, Inc., einem Unternehmen der Witco Corporation, erhältlich.

Das verwendete Isocyanatopropylalkoxysilan hat bevorzugt einen hohen Reinheitsgrad, insbesondere von mindestens 95%, und ist bevorzugt frei von Additiven, wie Umesterungskatalysatoren, die zu unerwünschten Nebenreaktionen führen können.

Zum Einsatz kommen insbesondere (Isocyanatomethyl)methyldimethoxysilan (erhältlich bei der Fa. Wacker - Chemie unter dem Markennamen Geniosil® XL 42), 3-Isocyanatopropyltrimethoxysilan (erhältlich bei der Fa. Wacker - Chemie unter dem Markennamen Geniosi®l XL 40) und N-Dimethoxy(methyl)silylmethyl-O-methylcarbamat (erhältlich bei der Fa. Wacker - Chemie unter dem Markennamen Geniosil® XL 65).

Erfindungsgemäß insbesondere bevorzugt sind Beschichtungsmittel, enthaltend mindestens eine hydroxylgruppenhaltige Verbindung (A) sowie mindestens eine isocyanatgruppenhaltige Verbindung (B), die dadurch gekennzeichnet sind, dass ein oder mehrere Bestandteile des Beschichtungsmittels als zusätzliche funktionelle Komponenten zwischen

2,5 und 97,5 mol-%, bezogen auf die Gesamtheit der Struktureinheiten (II) und (III), mindestens einer Struktureinheit der Formel (II)

$$-N(X\text{-}SiR''x(OR')3\text{-}x)n(X'\text{-}SiR''y(OR')3\text{-}y)m \qquad (II)$$

wobei

R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit
Ra = Alkyl, Cycloalkyl, Aryl oder Aralkyl, bevorzugt R' = Ethyl und/oder Methyl
X,X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit
Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 , sowie x,y = 0 bis 2,

und zwischen 2,5 und 97,5 mol-%, bezogen auf die Gesamtheit der Struktureinheiten (II) und (III), mindestens einer Struktureinheit der Formel (III)

$$-Z-(X-SiR''x(OR')3-x) \qquad (III),$$

wobei

Z = -NH-, -NR-,-O-, mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit
Ra = Alkyl, Cycloalkyl, Aryl oder Aralkyl,
x = 0 bis 2,
X, R', R" die bei Formel (II) angegebene Bedeutung haben aufweisen.

Ganz besonders bevorzugt sind Beschichtungsmittel, bei denen ein oder mehrere Bestandteile des Beschichtungsmittels zwischen 5 und 95 mol-%, insbesondere zwischen 10 und 90 mol-%, besonders bevorzugt zwischen 20 und 80 mol-%, und ganz besonders zwischen 30 und 70 mol-%, jeweils bezogen auf die Gesamtheit der Struktureinheiten (II) und (III), mindestens einer Struktureinheit der Formel (II) und zwischen 5 und 95 mol-%, insbesondere zwischen 10 und 90 mol-%, besonders bevorzugt zwischen 20 und 80 mol-%, und ganz besonders zwischen 30 und 70 mol-%, jeweils bezogen auf die Gesamtheit der Struktureinheiten (II) und (III), mindestens einer Struktureinheit der Formel (III), aufweisen.

**Die hydroxylgruppenhaltige Verbindung (A)**

Als hydroxylgruppenhaltige Verbindung (A) werden vorzugsweise sowohl niedermolekulare Polyole als auch oligo- und/oder polymere Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol sowie Polyole, wie bevorzugt Trimethylolethan, Trimethylolpropan, Trimethylolhexan, 1,2,4-Butantriol, Pentaerytritol sowie Dipentaerytritol, eingesetzt.

Bevorzugt werden solche niedermolekularen Polyole in untergeordneten Anteilen der oligo- und/oder polymeren Polyolkomponente (A) beigemischt.

Die bevorzugten oligo- und/oder polymeren Polyole (A) weisen massenmittlere Molekulargewichte Mw > 500 Dalton, gemessen mittels GPC (Gelpermeationschromatographie), bevorzugt zwischen 800 und 100.000 Dalton, insbesondere zwischen 1.000 und 50.000 Dalton auf. Besonders bevorzugt sind Polyesterpolyole, Polyurethanpolyole, Polysiloxanpolyole und insbesondere Polyacrylatpolyole und/oder Polymethacrylatpolyole sowie deren Mischpolymerisate, im folgenden Polyacrylatpolyole genannt. Die Polyole weisen bevorzugt eine OH-Zahl von 30 bis 400 mg KOH/g, insbesondere zwischen 100 und 300 KOH/g, auf. Die Glasübergangstemperaturen, gemessen per DSC (Differential-Thermoanalyse), der Polyole liegen bevorzugt zwischen -150 und 100 °C, besonders bevorzugt zwischen - 120°C und 80°C.

Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Die erfindungsgemäß ganz besonders bevorzugten Polyacrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard. Die Glasübergangstemperatur der Copolymerisate liegt in der Regel zwischen -100 und 100 °C, insbesondere zwischen -50 und 80 °C (gemessen mittels DSC-Messungen). Die Polyacrylatpolyole weisen bevorzugt eine OH-Zahl von 60 bis 250 mg KOH/g, insbesondere zwischen 70 und 200 KOH/g, sowie eine Säurezahl zwischen 0 und 30 mg KOH/g, auf.

Die Hydroxylzahl (OH-Zahl) gibt an, wieviel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).). Die Säurezahl gibt hierbei die Anzahl der mg Kaliumhydroxyid an, die zur Neutralisation von 1 g der jeweiligen Verbindung der Komponente (b) verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2- Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat, eingesetzt.

Als weitere Monomerbausteine werden für die Polyacrylatpolyole bevorzugt Alkylmethacrylate und/oder Alkylmethacrylate eingestetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

In einer weiteren Ausführungsform der Erfindung weist die hydroxylgruppenhaltige Verbindung A neben den Hydroxylgruppen Struktureinheiten der Formel (I) und/oder der Formel (II) und/oder der Formel (III) auf.

Struktureinheiten der Formel (II) können in die Verbindung (A) durch Einbau von Monomereinheiten mit solchen Struktureinheiten oder durch Umsetzung von Polyolen, die weitere funktionelle Gruppen aufweisen, mit einer Verbindung der Formel (IIa)

$$HN(X\text{-}SiR''x(OR')3\text{-}x)n(X'\text{-}SiR''y(OR')3\text{-}y)m \qquad (IIa),$$

eingeführt werden, wobei die Substituenten die obengenannte Bedeutung haben. Zur Umsetzung des Polyols mit der Verbindung (IIa) weist dieses entsprechend weitere funktionelle Gruppen auf, welche mit der sekundären Aminogruppe der Verbindung (IIa) reagieren, wie insbesondere Säure- oder Epoxygruppen. Erfindungsgemäß bevorzugte Verbindungen (IIa) sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASILAN ® der Fa. DEGUSSA bzw. Silquest ® der Fa. OSI verfügbar.

Monomerbausteine, die die Strukturelemente (II) tragen, sind vorzugsweise Umsetzungsprodukte der Acryl- und/oder der Methacrylsäure oder von epoxygruppenhaltigen Alkylacrylaten und/oder -methacrylaten mit den oben genannten Verbindungen (IIa).

Struktureinheiten der Formel (III) können in die Verbindung (A) durch Einbau von Monomereinheiten mit solchen Struktureinheiten oder durch Umsetzung von Polyolen, die weitere funktionelle Gruppen aufweisen, mit einer Verbindung der Formel (IIIa)

$$H\text{-}Z\text{-}(X\text{-}SiR''x(OR')3\text{-}x) \qquad (IIIa),$$

eingeführt werden, wobei die Substituenten die obengenannte Bedeutung haben. Zur Umsetzung des Polyols mit der Verbindung (IIIa) weist dieses entsprechend weitere funktionelle Gruppen auf, welche mit der funktionellen Gruppe -ZH der Verbindung (IIIa) reagieren, wie insbesondere Säure-, Epoxy- oder Estergruppen. Erfindungsgemäß bevorzugte Verbindungen (IIIa) sind omega-Aminoalkyl- oder omega-Hydroxyalkyltrialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, , 4-Aminobutyltriethoxysilan, 2-Hydroxyethyltrimethoxysilan, 2-Hydroxyethyltriethoxysilan, 3-Hydroxy-propyltrimethoxysilan, 3-Hydroxypropyltriethoxysilan, 4-Hydroxybutyltrimethoxysilan, 4-Hydroxybutyltriethoxysilan. Besonders bevorzugte Verbindungen (IIIa) sind N-(2-(trimethoxysilyl)ethyl)alkylamine, N-(3-(trimethoxysilyl) propyl)alkylamine, N-(4-(trimethoxysilyl) butyl)alkylamine , N-(2-(triethoxysilyl) ethyl)alkylamine, N-(3-(triethoxysilyl) propyl)alkylamine und/oder N-(4-(triethoxysilyl) butyl)alkylamine. Ganz besonders bevorzugt ist N-(3-(trimethoxysilyl) propyl)butylamin. Solche Aminosilane sind beispielsweise unter dem Markennamen DYNASILAN ® der Fa. DEGUSSA bzw. Silquest ® der Fa. OSI verfügbar.

Monomerbausteine, die die Strukturelemente (III) tragen, sind vorzugsweise Umsetzungsprodukte der Acryl- und/oder der Methacrylsäure oder von epoxygruppenhaltigen Alkylacrylaten und/oder -methacrylaten, sowie im Falle hydroxyfunktioneller Alkoxylsilylverbindungen Umesterungsprodukte von Alkylacrylaten und/oder -methacrylaten, insbesondere mit den oben genannten hydroxy- und/oder aminofunktionellen Alkoxysilylverbindungen (IIIa).

**Die isocyanatgruppenhaltigen Verbindungen (B)**

Als Komponente (B) enthalten die erfindungsgemäßen Beschichtungsmittel eine oder mehrere Verbindungen mit freien, d.h. unblockierten, und/oder blockierten Isocyanatgruppen. Bevorzugt enthalten die erfindungsgemäßen Beschichtungsmittel Verbindungen (B) mit freien Isocyanatgruppen. Die freien Isocyanatgruppen des isocyanatgruppenhaltigen Verbindungen B können aber auch in blockierter Form eingesetzt werden. Dies ist bevorzugt dann der Fall, wenn die erfindungsgemäßen Beschichtungsmittel als einkomponentige Systeme eingesetzt werden.

Die als Grundkörper für die erfindungsgemäß bevorzugt eingesetzten isocyanatgruppenhaltigen Verbindungen (B) dienenden Di- und/oder Polyisocyanate sind bevorzugt an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI® der Fa. American Cyanamid) und Mischungen der vorgenannten Polyisocyanate. Weiterhin bevorzugte Polyisocyanate sind die Biuret-Dimere und die Isocyanurat-Trimere der vorgenannten Diisocyanate.

Besonders bevorzugte Polyisocyanate sind Hexamethylen-1,6-diisocyanat, Isophorondiisocyanat und 4,4'-Methylendicyclohexyldiisocyanat, deren Biuret-Dimere und/oder Isocyanurat-Trimere.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuß an vorgenannten Polyisocyanaten erhalten werden. Solche Polyisocyanat-Präpolymere sind beispielsweise in US-A-4,598,131 beschrieben.

Die erfindungsgemäß ganz besonders bevorzugten, mit den Struktureinheiten (II) und (III) funktionalisierten isocyanatgruppenhaltigen Verbindungen (B) werden bevorzugt durch Umsetzung der vorgenannten Di- und/oder Polyisocyanate mit den vorgenannten Verbindungen (IIa) und (IIIa) hergestellt, indem zwischen 2,5 und 90 mol-%, bevorzugt 5 bis 85 mol-%, besonders bevorzugt 7,5 bis 80 mol-%, der Isocyanatgruppen im Polyisocyanatgrundkörper mit mindestens einer Verbindung (IIa) und zwischen 2,5 und 90 mol-%, bevorzugt 5 bis 85 mol-%, besonders bevorzugt 7,5 bis 80 mol-%, der Isocyanatgruppen im Polyisocyanatgrundkörper mit mindestens einer Verbindung (IIIa) umgesetzt werden.

Der Gesamtanteil der mit den Verbindungen (IIa) und (IIIa) umgesetzten Isocyanatgruppen liegt in der Polyisocyanatverbindung (B) zwischen 5 und 95 mol-%, bevorzugt zwischen 10 und 90 mol%, besonders bevorzugt zwischen 15 und 85 mol% der Isocyanatgruppen im Polyisocyanatgrundkörper. Insbesondere bei einem hohen Silanisierungsgrad, d.h. wenn ein hoher Anteil der Isocyanatgruppen, insbesondere von mindestens 50 mol-%, mit den Verbindungen (IIa) / (IIIa) umgesetzt worden ist, werden die Isocyanatgruppen vorteilhafterweise mit einer Mischung der Verbindungen (IIa) und (IIIa) umgesetzt.

Besonders bevorzugte Verbindungen (IIa) sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASILAN ® der Fa. DEGUSSA bzw. Silquest ® der Fa. OSI verfügbar.

Bevorzugte Verbindungen (IIIa) sind 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, , 4-Aminobutyltriethoxysilan, 2-Hydroxyethyltrimethoxysilan, 2-Hydroxyethyltriethoxysilan, 3-Hydroxy-propyltrimethoxysilan, 3-Hydroxypropyltriethoxysilan, 4-Hydroxybutyltrimethoxysilan, 4-Hydroxybutyltriethoxysilan.

Besonders bevorzugte Verbindungen (IIIa) sind N-(2- (trimethoxysilyl) ethyl)alkylamine, N-(3-(trimethoxysilyl) propyl)alkylamine, N-(4-(trimethoxysilyl) butyl)alkylamine , N-(2-(triethoxysilyl) ethyl)alkylamine, N-(3-(triethoxysilyl) propyl)alkylamine und/oder N-(4-(triethoxysilyl) butyl)alkylamine. Ganz besonders bevorzugt ist N-(3-(trimethoxysilyl) propyl)butylamin. Solche Aminosilane sind beispielsweise unter dem Markennamen DYNASILAN ® der Fa. DEGUSSA bzw. Silquest ® der Fa. OSI verfügbar.

Ganz besonders bevorzugte isocyanatgruppenhaltige Verbindungen (B) sind Umsetzungsprodukte von Hexamethylen-1,6-diisocyanat und/oder Isophorondiisocyanat, und/oder deren Isocyanurat-Trimere mit Bis(3-propyltrimethoxysilyl)amin und N-(3-(trimethoxysilyl) propyl)butylamin. Die Umsetzung der isocyanatgruppenhaltigen Verbindungen (B) mit den Verbindungen (IIa) und (IIIa) erfolgt vorzugsweise in Inertgasatmosphäre bei Temperaturen von maximal 100 °C, bevorzugt von maximal 60 °C.

Die freien Isocyanatgruppen des isocyanatgruppenhaltigen Verbindungen B können auch in blockierter Form eingesetzt werden. Dies ist bevorzugt dann der Fall, wenn die erfindungsgemäßen Beschichtungsmittel als einkomponentige Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Bevorzugt werden Blockierungsmittel, wie sie in EP-A-0 626 888 und EP-A-0 692 007 beschrieben sind, eingesetzt.

**Die Kombination der Komponenten A und B sowie weitere Komponenten des Beschichtungsmittels**

Der Gewichtsanteil der einzusetzenden hydroxylgruppenhaltigen Verbindungen A, bezogen auf den Gewichtsanteil der isocyanatgruppenhaltigen Verbindungen B, hängt vom Hydroxyäquivalentgewicht des Polyols und vom Äquivalentgewicht der freien Isocyanatgruppen des Polyisocyanats B ab.

Es ist bevorzugt, dass im erfindungsgemäßen Beschichtungsmittel ein oder mehrere Bestandteile zwischen 2,5 bis 97,5 mol-%, bezogen auf die Summe der Struktureinheiten (II) und (III), mindestens einer Struktureinheit (II) und zwischen 2,5 bis 97,5 mol-%, bezogen auf die Summe der Struktureinheiten (II) und (III), mindestens einer Struktureinheit (III) aufweisen.

Die erfindungsgemäßen Beschichtungsmittel enthalten bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, der hydroxylgruppenhaltigen Verbindungen (A) und bevorzugt zwischen 2,5 und 97,5 Gew.-%, besonders bevorzugt zwischen 5 und 95 Gew.%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, der isocyanatgruppenhaltigen Verbindungen (B).

Bezogen auf die Summe der für die Vernetzung im erfindungsgemäßen Beschichtungsmittel maßgeblichen funktionellen Gruppen, gebildet aus den Anteilen der Hydroxyl- und Isocyanatgruppen sowie den Anteilen der Strukturelemente (I) und/oder (II) und/oder (III), sind die Strukturelemente (I) und/oder (II) und/oder (III) bevorzugt in Anteilen von 2,5 bis 97,5 mol-%, besonders bevorzugt zwischen 5 und 95 mol-% und ganz besonders bevorzugt zwischen 10 und 90 mol-%, vorhanden.

In einer weiteren Ausführungsform der Erfindung können die Strukturelemente (I), (II) und/oder (III) zusätzlich auch Bestandteil einer oder mehrerer, sich von den Komponenten (A) und (B) unterscheidender weiterer Komponenten (D) sein, wobei die vorgenannten Kriterien anzuwenden sind. Beispielsweise können als Komponente (D) Oligomerisate oder Polymerisate mit Alkoxysilyl-Gruppen eingesetzt werden, wie beispielsweise die in den Patent(anmeldung)en US-A-4,499,150, US-A-4,499,151 oder EP-A-0 571 073 genannten Poly(meth)acrylate als Träger von Strukturelementen (III) oder die in der WO-A-2006/042585 genannten Verbindungen als Träger von Strukturelementen (II). In der Regel werden solche Komponenten (D) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Die Gewichtsanteile des Polyols A und des Polyisocyanats B werden vorzugsweise solchermaßen gewählt, dass das molare Äquivalentverhältnis der nicht umgesetzten Isocyanatgruppen der isocyanathaltigen Verbindungen (B) zu den Hydroxylgruppen der hydroxylgruppenhaltigen Verbindungen (A) zwischen 0,9:1 und 1:1,1, bevorzugt zwischen 0,95:1 und 1,05:1, besonders bevorzugt zwischen 0,98:1 und 1,02:1, liegt.

Handelt es sich um einkomponentige Beschichtungsmittel, so werden die isocyanatgruppenhaltigen Verbindungen (B) gewählt, deren freie Isocyanatgruppen mit den oben beschriebenen Blockierungsmitteln blockiert sind.

Bei den erfindungsgemäß bevorzugten 2-komponentigen (2K) Beschichtungsmitteln wird kurz vor der Applikation des Beschichtungsmittel eine Lackkomponente, enthaltend die hydroxylgruppenhaltige Verbindung (A) sowie weitere nachfolgend beschriebene Komponenten, mit einer weiteren Lackkomponente, enthaltend die isocyanatgruppenhaltige Verbindung (B) und gegebenenfalls weitere der nachfolgend beschriebenen Komponenten in an sich bekannter Weise vermischt, wobei in der Regel die Lackkomponente, die die Verbindung (A) enthält, den Katalysator sowie einen Teil des Lösemittels enthält.

Als Lösemittel für die erfindungsgemäßen Beschichtungsmittel sind insbesondere solche geeignet, die im

Beschichtungsmittel chemisch inert gegenüber den Verbindungen (A) und (B) sind und die auch bei der Härtung des Beschichtungsmittels nicht mit (A) und (B) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel auf.

Neben den Verbindungen (A), (B) und (D) können noch weitere Bindemittel (E) eingesetzt werden, welche vorzugsweise mit den Hydroxylgruppen der Verbindung (A) und/oder mit den freien Isocyanatgruppen der Verbindung (B) und/oder mit den Alkoxysilylgruppen der Verbindungen (A), (B) und/oder (D) reagieren und Netzwerkpunkte ausbilden können.

Beispielsweise sind als Komponente (E) Aminoplastharze und/oder Epoxyharze, verwendbar. Es kommen die üblichen und bekannten Aminoplastharze in Betracht, deren Methylol- und/oder Methoxymethylgruppenteilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Darüber hinaus kann das erfindungsgemäße Beschichtungsmittel mindestens ein übliches und bekanntes Lackadditiv in wirksamen Mengen, d.h. in Mengen vorzugsweise bis zu 30 Gew.-%, besonders bevorzugt bis zu 25 Gew.-% und insbesondere bis zu 20 Gew.%, jeweils bezogen auf die nichtflüchtigen Bestandteile des Beschichtungsmittels, enthalten.

Beispiele geeigneter Lackadditive sind:

- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
  Reaktivverdünner, wie sie aus dem Stand der Technik allgemein bekannt sind, welche bevorzugt inert gegenüber den -Si(OR)3-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- und /oder Flammschutzmittel.

In einer weiteren Ausführungsform der Erfindung kann das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung oder die modulare Kratzfestausrüstung von bereits lackierten

Automobilkarosserien.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturlackierung angewandten Temperaturen, die bevorzugt zwischen 30 und 90°C liegen, auch längere Härtzeiten zur Anwendung kommen können.

Die erfindungsgemäßen Beschichtungsmittel liefern neue gehärtete Beschichtungen, insbesondere Lackierungen, speziell Klarlackierungen, Formteile, speziell optische Formteile, und freitragende Folien, die hoch kratzfest und insbesondere chemikalien- und witterungsstabil sind. Insbesondere lassen sich die erfindungsgemäßen Beschichtungen und Lackierungen, speziell die Klarlackierungen, auch in Schichtdicken > 40 $\mu$m herstellen, ohne dass Spannungsrisse auftreten.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) sowie der Automobilreparaturlackierung eingesetzt. Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff., angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders bevorzugt 2 min bis zu 5 h und insbesondere 3 min bis 3 h, eingebrannt, wobei bei den für die Automobilreparaturlackierung angewandten Temperaturen, die bevorzugt zwischen 30 und 90°C liegen, auch längere Härtzeiten zur Anwendung kommen können.

Die mit dem erfindungsgemäßen Beschichtungsmittel erzeugten Schichten zeichnen sich vor allem durch eine besonders hohe Chemikalien- und Witterungsbeständigkeit sowie eine sehr gute Waschstraßenbeständigkeit und Kratzfestigkeit aus, insbesondere durch eine herausragende Kombination von Kratzfestigkeit und Witterungsstabilität gegen UV-Strahlung im Feucht-Trockenzyklus.

In einer weiteren bevorzugten Ausführungsform der Erfindung wird das erfindungsgemäße Beschichtungsmittel als transparenter Klarlack zur Beschichtung von Kunststoffsubstraten, insbesondere von transparenten Kunststoffsubstraten, eingesetzt. In diesem Fall beinhalten die Beschichtungsmittel UV-Absorber, die in Menge und Art auch auf den wirksamen UV-Schutz des Kunststoffsubstrats ausgelegt sind. Auch hier zeichnen sich die Beschichtungsmittel durch

eine herausragende Kombination von Kratzfestigkeit und Witterungsstabilität gegen UV-Strahlung im Feucht-Trockenzyklus aus. Die solchermaßen beschichteten Kunststoffsubstrate werden vorzugsweise für den Ersatz von Glaskomponenten im Automobilbau eingesetzt, wobei die Kunststoffsubstrate bevorzugt aus Polymethylmethacrylat oder Polycarbonat bestehen.

**Beispiele**

**Herstellbeispiel 1 - Herstellung des teilsilanisierten Härters auf der Basis von HDI-Trimerisaten**

Ein Reaktionsgefäß wurde mit einem Kühler versehen und mit Stickstoff beschickt. Anschließend wurden in dem Reaktionsgefäß 57,3 Gewichtsteile trimerisiertes Isocyanat (Basonat HI 100, erhältlich bei BASF AG, Ludwigshafen) und 3,88 Gewichtsteile Triethylorthoformiat vorgelegt. In einem separaten Gefäß wurden 2,82 Gewichtsteile N-(3-Trimethoxysilylpropan-1-yl)-N-n-butylamin (Dynasilan®1189 der Firma Degussa) mit 36,89 Gewichtsteilen N,N-Bis(3-Trimethoxysilylpropan-1-yl)-amin (Dynasilan®1124 der Firma Degussa) gemischt, wobei mit Stickstoff überschleiert wurde. Die so erhaltene Mischung der Amino - funktionllen Silane wurde langsam und unter Rühren zu dem vorgelegten Isocyanat getropft, so dass die Reaktionstempertatur 60°C nicht überschritt. Nach erfolgter Zugabe wurde das Reaktionsgemisch noch so lange bei 60°C gerührt bis der titrimetrisch zu bestimmende Isocynat - Gehalt bei 4,9 % lag. Darauf wurde das Gemisch auf Raumtemperatur abgekühlt.

Der Festkörper (30 Minuten 130°C) des so erhaltenen silanisierten Isocyanates wurde zu 60,10 % bestimmt.

**Herstellbeispiel 2 - Herstellung eines Polyacrylat-Polyols**

In einem Reaktor, der mit Stickstoff gespült wurde und auf dem ein Kühler angebracht ist, werden 759,61 Gewichtsteile Solvent Naphta vorgelegt und unter Rühren auf 145°C aufgeheizt.
Parallel dazu wurden zwei separate Zuläufe prepariert. Zulauf 1 bestand aus 488,10 Gewichtsteilen Ethylhexylmethacrylat , 213,54 Gewichtsteilen Styrol, 183,04 Gewichtsteilen n - Butylmethacrylat, 183,04 Gewichtsteilen 2 - Hydroxyethylacrylat, 457,60 Gewichtsteilen 4 - Hydroxybutylacrylat und 32,50 Gewichtsteilen Acrylsäure. Zulauf 2 bestand aus 62,54 Gewichtsteilen Solvent Naphta und 152,53 Gewichtsteilen Peroxid TBPEH. Nachdem die Temperatur von 145°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 120 Minuten bei 145°C gerührt.
Der Festkörpergehalt des so erhaltenen Produktes wurde zu 65,65 %, die Säurezahl zu 15,5 mg KOH / g (bezogen auf den Festkörper) und die Viskosität (bei 23°C) zu 21 d Pa s bestimmt. Die OH - Zahl wurde zu 174,7 bestimmt.

**Klarlackformulierungen**

| | Versuch 1 - Referenz | Versuch 2 - erfindungsgemäß | Versuch 3 - Vergleichsbeispiel |
|---|---|---|---|
| Acrylatharz aus Herstellbeispiel 2 | 59,04 | 59,04 | 59,04 |
| Solventnaphtha | 29,52 | 29,52 | 29,52 |
| Triethylorthoformiat | 3,00 | 3,00 | 3,00 |
| Byk 301 | 0,32 | 0,32 | 0,32 |
| Tinuvin 384-2 | 1,52 | 1,52 | 1,52 |
| Tinuvin 292 | 1,30 | 1,30 | 1,30 |
| Nacure 4167 | 5,30 | 5,30 | 5,30 |
| Triethylamin | 0 | 0 | 3,00 |
| DBN (30%ige Lösung in Butanol) | 0 | 0,10 | 0 |

Für die Herstellung der 2K-Klarlacke wurden die folgenden Mischungen aus Stammlack und Härter angefertigt:

| | Versuch 1 - Referenz | Versuch 2 - erfindungsgemäß | Versuch 3 - Vergleichsbeispiel |
|---|---|---|---|
| Zugabe von 100 Gewichtsteilen Härter gemäß Herstellbeispiel 1 auf die folgende Menge Stammlack | 100 | 100,1 | 103,0 |

Zur Herstellung von Zweikomponenten-Klarlackbeschichtungen werden die gemäß obigen Angaben hergestellten jeweils ersten Komponenten mit den nachfolgend genannten Einwaagen der zweiten Komponente (Härter gemäß Herstellbeispiel 1) homogenisiert und direkt danach appliziert. Dazu wurden Prüfbleche verwendet, die jeweils mit einer üblichen und bekannten, kathodisch abgeschiedenen, thermisch gehärteten Elektrotauchlackierung, einer üblichen und bekannten, thermisch gehärteten Füllerlackierung und einer während 10 Minuten bei 80°C vorgetrockneten Schicht aus einem handelsüblichen, konventionellen, schwarzen Basislack der Firma BASF Coatings AG beschichtet worden waren. Die Basislackschicht und die Klarlackschicht wurden gemeinsam während 22 Minuten bei 140°C gehärtet. Die resultierende Basislackierung wies eine Schichtdicke von 7,5 $\mu$m auf, die resultierende Klarlackierung eine Schichtdicke von ca. 35 $\mu$m.

Zur Bewertung des Effektes der einzelnen Katalysatoren auf den Umsatz der Isocyanatreaktion wurde während des Härtungsprozesses bei 140°C über einen Zeitraum von 30 Minuten die Umsetzung der Isocyanate mittels IR-Spektroskopie verfolgt. Die entsprechenden Ergebnisse sind in Tabelle 1 zusammengestellt.

Tabelle 1: Mittels IR - Spektroskopie ermittelter Isocyanatumsatz bei einer Härtung von 140°C. Wie die Beispiele zeigen wird der Isocyanatumsatz durch die Zugabe von DBN im Vergleich zur nicht modifizierten Referenz um 10 % nach 30 Minuten erhöht. Aber auch bereits zu Beginn der Härtung kann ein um 7 % erhöhter Umsatz im Vergleich zur Referenzprobe - Versuch 1 - gemessen werden.

| | Versuch 1 | Versuch 2 | Versuch 3 |
|---|---|---|---|
| Isocyanatumsatz Nach 5 Minuten Härtung bei 140°C | 40 % | 47 % | 17 % |
| Isocyanatumsatz Nach 30 Minuten Härtung bei 140°C | 43 % | 53 % | 30 % |

Die Ergebnisse zeigen, dass die Formulierung mit DBN zu einem erhöhten Isocyanatumsatz führt, während die Zugabe von Triethylamin in derartigen Formulierungen einen gegenteiligen Effekt zeigt.

Die Auswertung der weiteren Banden zeigt keine Veränderung während der Aushärtung zwischen Versuch 1 und Versuch 3, was den Schluß nahe legt, dass die Silanvernetzung durch den Zusatz an DBN unbeeinflusst bleibt.

Höhere Konzentrationen an zugesetzten Aminen als in den Beispielen aufgezeigt, sollten vorzugsweise in den Klarlackformulierungen nicht eingesetzt werden, da diese zu Vergilbung bei Überbrennung führen und auch eine nicht akzeptable Geruchsbelästigung bewirken.

Es ist im Stand der Technik allgemein bekannt, dass ein höherer Isocyanatumsatz letztendlich zu besseren Produkteigenschaften führt, u. a. in der Bewitterung, dadurch dass Nachvernetzungsreaktionen nicht oder nur in sehr begrenztem Umfang auftreten, die sich insbesondere in einer verbesserten Säurebeständigkeit bemerkbar machen. Die Beispiele und Vergleichsbeispiele zeigen, das 1,5-Diazabicyclo[4.3.0]non-5-en (DBN) und 1,8-Diazabicyclo[5.4.0]undec-7-en (DBU) einen positiven Einfluss auf die Isocyanatvernetzung haben, während sich Triethylamin (TEA) und Diazabicyclooctan (DABCO) negativ auswirken.

**Patentansprüche**

**1.** Beschichtungsmittel enthaltend

(a) mindestens eine hydroxylgruppenhaltige Verbindung (A),
(b) mindestens eine Verbindung (B) mit frelen und/oder blockierten Isocyanatgruppen, und
(c) mindestens einen phosphorhaltigen Katalysator (C) für die Vernetzung von Sllangruppen,
(d) mindestens einen weiteren Katalysator (D),
wobei ein oder mehrere Bestandteile des Beschichtungsmittels hydrolysierbare Silangruppen enthalten, **dadurch gekennzeichnet, dass** der Katalysator (D) ein bicyclisches Amin ist und der Katalysator (D) 1,5-Diazabicyclo[4.3.0]non-5-en oder 1,8-Diazabicyclo[5.4.0]undec-7-en ist.

2. Beschichtungsmittel nach Anspruch 1, **dadurch gekennzeichnet, dass** ein oder mehrere Bestandteile des Beschichtungsmittels mindestens teilweise eine oder mehrere, gleiche oder verschiedene Struktureinheiten der Formel (I) aufweisen

$$-X-Si-R''_xG_{3-x} \qquad (I)$$

mit

G = identische oder unterschiedliche hydrolysierbare Gruppen, insbesondere
G = Alkoxygruppe (OR'),
X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
x = 0 bis 2, bevorzugt 0 bis 1, besonders bevorzugt x = 0.

3. Beschichtungsmittel nach einem der Ansprüche 1 oder 2, **dadurch gekennzeichnet, dass** ein oder mehrere Bestandteile des Beschichtungsmittels
zwischen 2,5 und 97,5 mol-%, bezogen auf die Gesamtheit der Struktureinheiten (II) und (III), mindestens einer Struktureinheit der Formel (II)

$$-N(X-SiR''_x(OR')_{3-x})_n(X'-SiR''_y(OR')_{3-y})_m \qquad (II)$$

wobei

R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/- oder Methyl
X,X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 , sowie
x,y = 0 bis 2,

und
zwischen 2,5 und 97,5 mol-%, bezogen auf die Gesamtheit der Struktureinheiten (II) und (III), mindestens einer Struktureinheit der Formel (III)

$$-Z-(X-SiR''_x(OR')_{3-x}) \qquad (III),$$

wobei

Z = -NH-, -NR-,-O-, mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
x = 0 bis 2, und
X, R', R" die bei Formel (II) angegebene Bedeutung haben,

aufweisen.

4. Beschichtungsmittel nach Anspruch 1 bis 3, **dadurch gekennzeichnet, dass** ein oder mehrere Bestandteile des Beschichtungsmittels zwischen 5 und 95 mal-%, insbesondere zwischen 10 und 90 mol-%, besonders bevorzugt zwischen 20 und 80 mal-%, und ganz besonders zwischen 30 und 70 mol%, jeweils bezogen auf die Gesamtheit der Struktureinheiten (II) und (III), mindestens einer Struktureinheit der Formel (II) und zwischen 5 und 95 mol-%, insbesondere zwischen 10 und 90 mol%, besonders bevorzugt zwischen 20 und 80 mol-%, und ganz besonders zwischen 30 und 70 mol-%, jeweils bezogen auf die Gesamtheit der Struktureinheiten (II) und (III), mindestens einer Struktureinheit der Formel (III), aufweisen.

5. Beschichtungsmittel nach Anspruch 3 oder 4, **dadurch gekennzeichnet, dass** die Strukturelemente (II) und (III) in Anteilen von 2,5 bis 97,5 mol-%, bevorzugt von 5 bis 95 mol-%, besonders bevorzugt zwischen 10 und 90 mal-%, jeweils bezogen auf die Summe der für die Vernetzung Im Beschichtungsmittel maßgeblichen funktionellen Gruppen, gebildet aus den Anteilen der Hydroxyl- und Isocyanatgruppen sowie den Antellen der Strukturelemente (II) und (III), vorhanden sind.

6. Beschichtungsmittel nach einem der Ansprüche 2 bis 5, **dadurch gekennzeichnet, dass** das Polyisocyanat (B) die Struktureinheiten (I) bzw. (II) bzw. (III) aufweist.

7. Beschichtungsmittel nach Anspruch 6, **dadurch gekennzeichnet, dass** im Polyisocyanat (B)
zwischen 2,5 und 90 mol-%, der Isocyanatgruppen im Polyisocyanatgrundkörper zu Struktureinheiten (II) und
zwischen 2,6 und 90 mol-%, der Isocyanatgruppen im Polyisocyanatgrundkörper zu Struktureinheiten (III)
umgesetzt sind und der Gesamtanteil der zu den Struktureinheiten (II) und (III) umgesetzten Isocyanatgruppen im Polyisocyanatgrundkörper zwischen 5 und 95 mol-% liegt.

8. Beschichtungsmittel nach Anspruch 6 oder 7, **dadurch gekennzeichnet, dass** der Polyisocyanatgrundkörper ausgewählt ist aus der Gruppe 1,6-Hexamethylendiisocyanat, Isophorondiisocyanat, und 4,4'-Methylendicyclohexyldiisocyanat, der Biuret-Dimeren der vorgenannten Polyisocyanate und/oder der Isocyanurat-Trimeren der vorgenannten Polyisocyanate.

9. Beschichtungsmittel nach einem der Ansprüche 1 bis 8, **dadurch gekennzeichnet, dass** das Polyol (A) mindestens ein Poly(meth)acrylatpolyol enthält.

10. Beschichtungsmittel nach Anspruch 1 bis 9, **dadurch gekennzeichnet, dass** der Katalysator (D) in einer Menge von 0,01 bis 3 Ges.-%, bevorzugt 0, 1 bis 2 Gew.-%, bezogen auf den Feststoffgehalt des Beschichtungsmittels in diesem enthalten ist.

11. Mehrstufiges Beschichtungsverfahren, **dadurch gekennzeichnet, dass** auf ein gegebenenfalls vorbeschichtetes Substrat eine pigmentierte Basislackschicht und danach eine Schicht aus dem Beschichtungsmittel nach einem der Ansprüche 1 bis 10 aufgetragen wird.

12. Mehrstufiges Beschichtungsverfahren nach Anspruch 11, **dadurch gekennzeichnet, dass** nach den Auftrag der pigmentierten Basislackschicht der aufgebrachte Basislack zunächst bei Temperaturen von Raumtemperatur bis 80°C getrocknet wird und nach dem Auftrag des Beschichtungsmittels nach einem der Ansprüche 1 bis 9 bei Temperaturen von 30 bis 200°C während einer Zeit von 1 min bis zu 10 h gehärtet wird.

13. Verwendung der Beschichtungsmittel nach einem der Ansprüche 1 bis 10 als Klarlack bzw. Anwendung des Verfahrens nach Anspruch 11 oder 12 für die Automobilserlenlackierung und die Automobilreparaturlackierung.

## Claims

1. Coating composition comprising

(a) at least one hydroxyl-containing compound (A),
(b) at least one compound (B) having free and/or blocked isocyanate groups, and
(c) at least one phosphorus-containing catalyst (C) for the crosslinking of silane groups,
(d) at least one further catalyst (D),
one or more constituents of the coating composition containing hydrolyzable silane groups, **characterized in that** the catalyst (D) is a bicyclic amine and the catalyst (D) is 1,5-diazabicyclo[4.3.0]non-5-ene or 1,8-diazabicyclo[5.4.0]undec-7-ene.

2. Coating composition according to Claim 1, **characterized in that** one or more constituents of the coating composition at least partly contain one or more, alike or different structural units of the formula (I)

$$-X-Si-R''_xG_{3-x} \qquad (I)$$

with

G = identical or different hydrolyzable groups, more particularly
G = alkoxy group (O R'),
X = organic radical, more particularly linear and/or branched alkylene or cycloalkylene radical having 1 to 20 carbon atoms, very preferably
X = alkylene radical having 1 to 4 carbon atoms,
R" = alkyl, cycloalkyl, aryl, or aralkyl, it being possible for the carbon chain to be interrupted by nonadjacent oxygen, sulfur or NRa groups, with
Ra = alkyl, cycloalkyl, aryl or aralkyl, preferably
R" = alkyl radical, more particularly having 1 to 6 C atoms,
x = 0 to 2, preferably 0 to 1, more preferably x = 0.

3. Coating composition according to either of Claims 1 and 2, **characterized in that** one of more constituents of the coating composition contain between 2.5 and 97.5 mol%, based on the entirety of structural units (II) and (III), of at least one structural unit of the formula (II)

$$-N(X-SiR''_x(OR')_{3-x})_n(X'-SiR''_y(OR')_{3-y})_m \qquad (II)$$

where

R' = hydrogen, alkyl or cycloalkyl, it being possible for the carbon chain to be interrupted by nonadjacent oxygen, sulfur or NRa groups, with Ra = alkyl, cycloalkyl, aryl or aralkyl, preferably
R' = ethyl and/or methyl,
X, X' = linear and/or branched alkylene or cycloalkylene radical having 1 to 20 carbon atoms, preferably X, X' = alkylene radical having 1 to 4 carbon atoms,
R" = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl, preferably
R" = alkyl radical, more particularly having 1 to 6 C atoms,
n = 0 to 2, m = 0 to 2, m+n = 2 , and
x,y = 0 to 2,

and between 2.5 and 97.5 mol%, based on the entirety of structural units (II) and (III), of at least one structural unit of the formula (III)

$$-Z-(X-SiR''_x(OR')_{3-x}) \quad (III),$$

where

Z = -NH-, -NR-, -O-, with
R = alkyl, cycloalkyl, aryl or aralkyl, it being possible for the carbon chain to be interrupted by nonadjacent oxygen, sulfur or NRa groups, with Ra = alkyl, cycloalkyl, aryl or aralkyl,
x = 0 to 2, and
X, R', R" being as defined for formula (II).

4. Coating composition according to Claim 1 to 3, **characterized in that** one or more constituents of the coating composition contain between 5 and 95 mol%, more particularly between 10 and 90 mol%, with particular preference

between 20 and 80 mol%, and very particularly between 30 and 70 mol%, based in each case on the entirety of structural units (II) and (III), at least one structural unit of the formula (II) and between 5 and 95 mol%, more particularly between 10 and 90 mol%, with particular preference between 20 and 80 mol%, and very particularly between 30 and 70 mol%, based in each case on the entirety of structural units (II) and (III), of at least one structural unit of the formula (III).

**5.** Coating composition according to Claim 3 or 4, **characterized in that** the structural elements (II) and (III) are present in fractions of 2.5 to 97.5 mol%, preferably of 5 to 95 mol%, more preferably between 10 and 90 mol%, based in each case on the sum of the functional groups critical for crosslinking in the coating composition, formed from the fractions of the hydroxyl and isocyanate groups and from the fractions of the structural elements (II) and (III).

**6.** Coating composition according to any one of Claims 2 to 5, **characterized in that** the polyisocyanate (B) comprises the structural units (I) and/or (II) and/or (III).

**7.** Coating composition according to Claim 6, **characterized in that**, in the polyisocyanate (B), between 2.5 and 90 mol% of the isocyanate groups in the core polyisocyanate structure have undergone reaction to structural units (II) and between 2.5 and 90 mol% of the isocyanate groups in the core polyisocyanate structure have undergone reaction to structural units (III)
and the total fraction of the isocyanate groups in the core polyisocyanate structure that have undergone reaction to structural units (II) and (III) is between 5 and 95 mol%.

**8.** Coating composition according to Claim 6 or 7, **characterized in that** the core polyisocyanate structure is selected from the group of 1,6-hexamethylene diisocyanate, isophorone diisocyanate, and 4,4'-methylenedicyclohexyl diisocyanate, the biuret dimers of the aforementioned polyisocyanates and/or the isocyanurate trimers of the aforementioned polyisocyanates.

**9.** Coating composition according to any one of Claims 1 to 8, **characterized in that** the polyol (A) comprises at least one poly(meth)acrylate polyol.

**10.** Coating composition according to Claim 1 to 9,
**characterized in that** the catalyst (D) is present in the coating composition in an amount of 0.01% to 3% by weight, preferably 0.1% to 2% by weight, based on the solids content of said composition.

**11.** Multistage coating method, characetrized in that a
pigmented basecoat film is applied to an uncoated or precoated substrate and thereafter a film of the coating composition according to any one of Claims 1 to 10 is applied.

**12.** Multistage coating method according to Claim 11,
**characterized in that**, following the application of the pigmented basecoat film, the applied basecoat material is first dried at temperatures from room temperature to 80°C and, following the application of the coating composition according to any one of Claims 1 to 9, the system is cured at temperatures from 30 to 200°C for a time of 1 min up to 10 h.

**13.** Use of the coating composition according to any one of Claims 1 to 10 as a clearcoat material or application of the method according to Claim 11 or 12 for automotive OEM finishing or automotive refinish.

### Revendications

**1.** Agent de revêtement, contenant

(a) au moins un composé (A) contenant des groupes hydroxyle,
(b) au moins un composé (B) présentant des groupes isocyanate libres et/ou bloqués et
(c) au moins un catalyseur (D) contenant du phosphore pour la réticulation de groupes silane,
(d) au moins un autre catalyseur (D),
un ou plusieurs constituants de l'agent de revêtement contenant des groupes silane hydrolysables, **caractérisé en ce que** le catalyseur (D) est une amine bicyclique et le catalyseur (D) est le 1,5-diazabicyclo[4,3,0]non-5-ène ou le 1,8-diazabicyclo[5,4,0]undéc-7-ène.

**2.** Agent de revêtement selon la revendication 1, **caractérisé en ce qu'**un ou plusieurs constituants de l'agent de revêtement présente(nt) au moins en partie une ou plusieurs unités structurales identiques ou différentes de formule (I)

$$-X-Si-R''_xG_{3-x} \quad (I)$$

dans laquelle

G = des groupes hydrolysables identiques ou différents, en particulier
G = un groupe alcoxy (OR'),
X = un radical organique, en particulier un radical alkylène linéaire et/ou ramifié ou cycloalkylène, comprenant 1 à 20 atomes de carbone, de manière tout particulièrement préférée X = un radical alkylène comprenant 1 à 4 atomes de carbone,
R" = alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle, de préférence R" = un radical alkyle, comprenant en particulier 1 à 6 atomes de carbone,
x = 0 à 2, de préférence 0 à 1, de manière particulièrement préférée x = 0.

**3.** Agent de revêtement selon l'une quelconque des revendications 1 ou 2, **caractérisé en ce qu'**un ou plusieurs constituants de l'agent de revêtement contien(nen)t entre 2,5 et 97,5% en mole, par rapport à la totalité des unités structurales (II) et (III), d'au moins une unité structurale de formule (II)

$$-N(X-SIR''_x(OR'_{3-x})_n(X'-SiR''_y(OR')_{3-y})_m \; (II)$$

dans laquelle

R' = hydrogène, alkyle ou cycloalkyle, la chaîne carbonée pouvant être interrompue par des groupes oxygène, soufre ou NRa non adjacents, avec Ra = alkyle, cycloalkyle, aryle ou aralkyle, de préférence R' = éthyle et/ou méthyle,
X,X' = un radical alkylène linéaire et/ou ramifié ou cycloalkylène, comprenant 1 à 20 atomes de carbone, de préférence X, X' = un radical alkylène comprenant 1 à 4 atomes de carbone,
R" = alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle, de préférence R" = un radical alkyle, comprenant en particulier 1 à 6 atomes de carbone,
n = 0 à 2, m = 0 à 2, m+n = 2, et
x, y = 0 à 2, et

entre 2,5 et 97,5% en mole, par rapport à la totalité des unités structurales (II) et (III), d'au moins une unité structurale de formule (III)

$$-Z-(X-SIR''_x(OR')_{3-x}) \quad (III),$$

dans laquelle

Z = -NH-, -NR-,-O-, avec
R = alkyle, cycloalkyle, aryle ou aralkyle, la chaîne carbonée pouvant être interrompue par des groupes oxygène, soufre ou NRa non adjacents, avec Ra = alkyle, cycloalkyle, aryle ou aralkyle,
x = 0 à 2 et
X, R', R" ont la signification indiquée pour la formule (II).

**4.** Agent de revêtement selon les revendications 1 à 3, **caractérisé en ce qu'**un ou plusieurs constituants de l'agent de revêtement présente(nt) entre 5 et 95% en mole, en particulier entre 10 et 90% en mole, de manière particulièrement préférée entre 20 et 80% en mole et de manière tout particulièrement préférée entre 30 et 70% en mole, à chaque fois par rapport à la totalité des unités structurales (II) et (III), d'au moins une unité structurale de formule

(II) et entre 5 et 95% en mole, en particulier entre 10 et 90% en mole, de manière particulièrement préférée entre 20 et 80% en mole et de manière tout particulièrement préférée entre 30 et 70% en mole, à chaque fois par rapport à la totalité des unités structurales (II) et (III), d'au moins une unité structurale de formule (III).

5. Agent de revêtement selon la revendication 3 ou 4, **caractérisé en ce que** les éléments de structure (II) et (III) sont présents en des proportions de 2,5 à 97,5% en mole, de préférence de 5 à 95% en mole, de manière particulièrement préférée entre 10 et 90% en poids, à chaque fois par rapport à la somme des groupes fonctionnels déterminants pour la réticulation dans l'agent de revêtement, formée par les proportions des groupes hydroxyle et isocyanate ainsi que par les proportions des éléments de structure (II) et (III).

6. Agent de revêtement selon l'une quelconque des revendications 2 à 5, **caractérisé en ce que** le polyisocyanate (B) présente les unités structurales (I) ou, selon le cas, (II) ou, selon le cas, (III).

7. Agent de revêtement selon la revendication 6, **caractérisé en ce que**, dans le polyisocyanate (B), entre 2,5 et 90% en mole des groupes isocyanate dans le corps de base polyisocyanate sont transformés en unités structurales (II) et entre 2,6 et 90% en mole des groupes isocyanate dans le corps de base polyisocyanate sont transformés en unités structurales (III) et la proportion totale des groupes isocyanate dans le corps de base polyisocyanate transformés en unités structurales (II) et (III) se situe entre 5 et 95% en mole.

8. Agent de revêtement selon la revendication 6 ou 7, **caractérisé en ce que** le corps de base polyisocyanate est choisi dans le groupe formé par le diisocyanate de 1,6-hexaméthylène, le diisocyanate d'isophorone et le diisocyanate de 4,4'-méthylènedicyclohexyle, les dimères de biuret des polyisocyanates susmentionnés et/ou les trimères d'isocyanurate des polyisocyanates susmentionnés.

9. Agent de revêtement selon l'une quelconque des revendications 1 à 8, **caractérisé en ce que** le polyol (A) contient au moins un poly(méth)acrylate-polyol.

10. Agent de revêtement selon les revendications 1 à 9, **caractérisé en ce que** le catalyseur (D) est contenu dans l'agent de revêtement en une quantité de 0,01 à 3% en poids, de préférence de 0,1 à 2% en poids, par rapport à la teneur en solides de celui-ci.

11. Procédé de revêtement à plusieurs étapes, **caractérisé en ce qu'**on applique, sur un substrat le cas échéant revêtu au préalable, une couche de laque de base pigmentée, puis une couche de l'agent de revêtement selon l'une quelconque des revendications 1 à 10.

12. Procédé de revêtement en plusieurs étapes selon la revendication 11, **caractérisé en ce qu'**après l'application de la couche de laque de base pigmentée, on sèche d'abord la couche de laque de base appliquée à des températures allant de la température ambiante à 80°C et, après l'application de l'agent de revêtement selon l'une quelconque des revendications 1 à 9, on durcit à des températures de 30 à 200°C pendant un laps de temps de 1 min à 10 h.

13. Utilisation de l'agent de revêtement selon l'une quelconque des revendications 1 à 10 comme laque claire ou application du procédé selon la revendication 11 ou 12 pour le laquage en série et le laquage de réparation de voitures.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0198393 A
- EP 0994117 A
- US 20060217472 A
- WO 2006042585 A
- EP 1273640 A
- DE 102005045228 A
- WO 0703857 A
- WO 0109260 A
- US 4598131 A
- EP 0626888 A
- EP 0692007 A
- US 4499150 A
- US 4499151 A
- EP 0571073 A
- US 4710542 A
- EP 0245700 B
- WO 9422968 A
- EP 0276501 A
- EP 0249201 A
- WO 9712945 A
- EP 0008127 A


### In der Beschreibung aufgeführte Nicht-Patentliteratur


- **B. SINGH ; MITARBEITER.** Carbamylmethylated Melamines, Novel Crosslinkers for the Coatings Industry. *Advanced Organic Coatings Science and Technology Series,* 1991, vol. 13, 193-207
- Römpp Lexikon »Lacke und Druckfarben«. Georg Thieme Verlag, 1998, 250-252